**Europäisches Patentamt**

**European Patent Office**

**Office européen des brevets**

(19)

(11) Veröffentlichungsnummer : **0 149 742 B2**

(12) **NEUE EUROPÄISCHE PATENTSCHRIFT**

(45) Veröffentlichungstag der neuen Patentschrift :
01.04.92 Patentblatt 92/14

(21) Anmeldenummer : **84113471.1**

(22) Anmeldetag : **08.11.84**

(51) Int. Cl.⁵ : **B60K 23/04**

(54) **Fahrzeug mit Differentialsperre.**

(30) Priorität : **25.11.83 DE 3342574**

(43) Veröffentlichungstag der Anmeldung :
**31.07.85 Patentblatt 85/31**

(45) Bekanntmachung des Hinweises auf die
Patenterteilung :
**12.08.87 Patentblatt 87/33**

(45) Bekanntmachung des Hinweises auf die
Entscheidung über den Einspruch :
**01.04.92 Patentblatt 92/14**

(84) Benannte Vertragsstaaten :
**DE FR GB IT SE**

(56) Entgegenhaltungen :
**DE-A- 2 049 262**
**DE-A- 2 164 324**

(56) Entgegenhaltungen :
**DE-A- 2 741 531**
**DE-A- 3 205 627**
**DE-A- 3 212 495**
**DE-A- 3 313 823**
**DE-B- 1 806 671**
**FR-A- 2 374 181**
**US-A- 4 162 712**
**US-A- 4 320 813**

(73) Patentinhaber : **ROBERT BOSCH GMBH**
**Postfach 30 02 20**
**W-7000 Stuttgart 30 (DE)**

(72) Erfinder : **Sigl, Alfred, Dipl.-Ing.**
**Waldeck 8**
**W-7126 Gersheim (DE)**

(74) Vertreter : **Kammer, Arno, Dipl.-Ing.**
**ROBERT BOSCH GmbH Zentralabteilung**
**Patente Postfach 30 02 20**
**W-7000 Stuttgart 30 (DE)**

EP 0 149 742 B2

Jouve, 18, rue Saint-Denis, 75001 PARIS

## Beschreibung

Die Erfindung betrifft ein Fahrzeug mit den Merkmalen des Oberbegriffs des Anspruches 1.

Fahrzeuge mit von Hand einkoppelbaren Sperren für die angetriebenen Räder sind allgemein unter dem Namen Sperrdifferential bekannt. Auch ist es allgemein bekannt, ein Fahrzeug mit einer Vortriebsregelung auszustatten, die verhindert, daß die angetriebenen Räder bei der Beschleunigung des Fahrzeugs durchdrehen. Sehr häufig wird eine Doppelregelung angewendet, bei der bei Durchdrehen eines Rads dieses gebremst wird und bei Durchdrehen beider Räder das Motordrehmoment abgesenkt wird (DE-PS 31 27 301). Es ist auch bekannt (DE-PS 21 64 324, DE-OS 33 13 823) Sperren durch elektrische Singale einkoppelbar auszubilden und diese neben Antriebsschlupfregelsystemen zu verwenden.

Auch bei der im Patentanspruch 1 angegebenen Erfindung wird die Sperre für die angetriebenen Räder elektrisch einkoppelbar ausgebildet und die Einkopplung automatisch vorgenommen, wenn die Räder durchdrehen oder zu erwarten ist, daß die Räder durchdrehen und die Räder ungefährt gleiche Raddrehzahlen aufweisen. Durch die Vortriebsregelung wird dabei die Stabilität des Fahrzeugs gewährleistet, während durch die Sperre eine optimale Traktion erzielt wird.

Durch die erfindungsgemäße Angleichung der Raddrehzahlen vor dem Einlegen der Sperre wird ein weicher Übergang erzielt.

Zusätzlich kann auch noch eine elektrisch einkoppelbare Sperre verwendet werden, die die Räder einer weiteren Achse mit dem Antrieb verbindet.

Weitere Einzelheiten ergeben sich aus der folgenden Figurenbeschreibung.

Es zeigen

Fig. 1 eine Prinzipdarstellung eines erfindungsgemäß ausgestatteten Fahrzeugs,

Fig. 2 eine möglich einfache Ansteuerschaltung für die Einkopplung der Sperre,

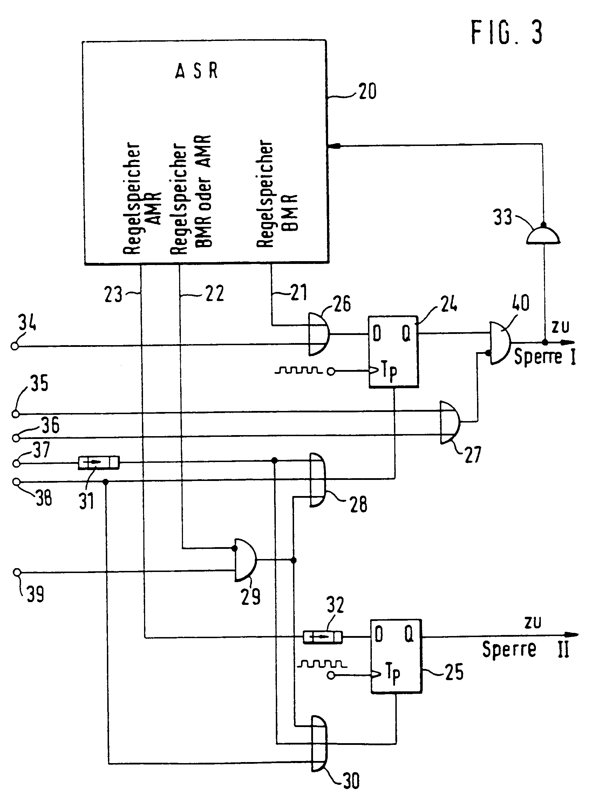

Fig. 3 eine Steuerschaltung für zwei Sperren.

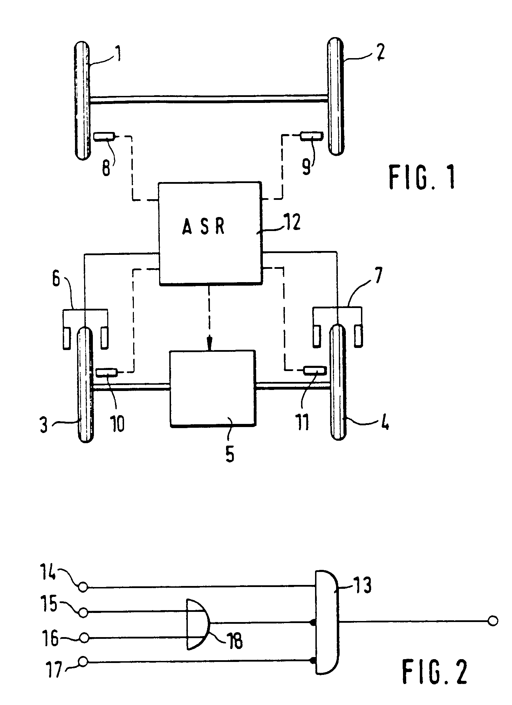

In Fig. 1 sind mit 1 und 2 die nicht angetriebenen Räder eines Fahrzeugs und mit 3 und 4 die angetriebenen Räder bezeichnet. Die Räder 3 und 4 werden über ein Sperrdifferential 5 angetrieben, das durch Ansteuerung mit elektrischen Signalen z. B. mittels eines Stellmagneten ein- und auskoppelbar ist. Mit 6 und 7 sind die Bremsen der angetriebenen Räder 3 und 4 bezeichnet und mit 8-11 Geschwindigkeitssensoren an den Rädern 1-4. Die Signale dieser Sensoren 8-11 werden einer Steuerschaltung 12 zugeführt, die die Betätigung der Bremsen 6 und 7 im Sinne einer Vortriebsregelung und hier auch noch die Einschaltung der Sperre im Differential 5 steuert. Die Bremssteuerung erfolgt in an sich bekannter Weise z. B. durch Drehzahlvergleich zwischen den Rädern 1 und 3 bzw. 2 und 4. Die Einkopplung der Sperre im Differential 5 z. B. kann durch die Schaltung der Fig. 2 erfolgen, wobei ein Einkoppelsignal durch ein Und-Gatter 13 erzeugt wird, wenn die Vortriebsregelung in Betrieb ist und damit ein entsprechendes Signal an der Klemme 14 erscheint und andererseits das Und-Gatter 13 nicht durch ein Querbeschleunigungssignal (Klemme 15) oder ein einen Lenkeinschlag anzeigendes Signal (Klemme 16) oder ein Signal (Klemme 17) gesperrt wird, das anzeigt, daß eines der nicht angetriebenen Räder um einen vorgegebenen Betrag schneller dreht, als das andere. Alle drei Signale sind Alternativen zur Anzeige einer Kurvenfahrt, während der es wegen der Beanspruchung des Getriebes und der Reifen nicht sinnvoll ist die Sperre einzuschalten bzw. eingeschaltet zu lassen.

Bei der erfindungsgemäßen Kombination von Sperrdifferential und Vortriebsregelung wird eine Überlastung der Bremsen während der Antriebsregelung vermieden. Außerdem wird, senn wenigstens ein Rad auf Untergrund mit hohem Reibwert läuft, vermieden, daß Antriebsenergie in Wärme umgesetzt wird.

Bei der Steuerschaltung der Fig. 2 gibt ein Steuerschaltungsanteil 20 für die Vortriebsregelung auf einer Leitung 21 ein Signal ab, wenn und solange ein Bremsregelspeicher gesetzt ist. Dieser wird z. B. gesetzt, wenn ein angetriebenes Rad einer Fahrzeugseite eine bestimmte Drehzahldifferenz oder Schlupf gegenüber dem nicht angetriebenen Rad der gleichen Seite aufweist und gegebenenfalls eine bestimmte Radbeschleunigung aufweist. Er wird erst wieder rückgesetzt, wenn die Drehzahl des nicht angetriebenden Rads für eine vorgegebene Zeit gleich oder größer als die Drehzahl des angetriebenen Rads ist. Auf einer Leitung 23 erscheint ein Signal, wenn und solange ein zweiter Regelspeicher gesetzt ist. Dieser wird gesetzt, wenn z. B. die mittlere Geschwindigkeit ($V_MAN$) der angetriebenen Räder die mittlere Geschwindigkeit ($V_MA$) der nicht angetriebenen Räder um eine vorgegebene Größe überschreitet und rückgesetzt, wenn die Drosselklappenstellung der Fahrpedalstellung entspricht und unterhalb der Antriebsmomentregelungsvorgabe liegt. Auf einer Leitung 22 schließlich erscheint ein Signal, wenn einer dieser Regelspeicher gesetzt ist.

Der der Einkopplung der beiden nicht gezeigten Sperren I und II dienende Steuerschaltungsanteil enthält zwei bistabile Glieder 24 und 25 und Verknüpfungsgatter 26-30, 40 Zeitglieder 31 und 32 sowie einen Inverter 33. Dem Steuerschaltungsanteil werden über Klemmen 34-39 Signale bei folgenden Kriterien zugeführt:

Klemme 34: Vergrößerung der Drosselklappenstellung um wenigstens einen vorgegebenen Betrag in einer vorgegebenen Zeit oder Durchtreten des Fahrpedals (Kickdown): Durchdrehgefahr.

Klemme 35: Differenz der Geschwindigkeiten der angetriebenen Räder größer als vorgegebener Wert.

Klemme 36: Betrag des Lenkwinkels größer als eine vorgegebene Größe und/oder Vorliegen einer bestimmten Querbeschleunigung (Kurvenerkennung).

Klemme 37: Drosselklappenstellung in der Nähe von 0.

Klemme 38: Bremsbetätigung.

Klemme 39: Keine Fahrzeugbeschleunigung.

Aus der Verschaltung der Fig. 2 ergibt sich folgende Arbeitsweise.

Erscheint auf Leitung 21 aufgrund des Beginns der Regelung des Bremsdrucks an einem Rad oder an Klemme 34 aufgrund der starken Betätigung des Fahrpedals ein Signal, so wird das bistabile Glied 24 gesetzt und, wenn das Und-Gatter 25 nicht gesperrt ist, die Sperre I angesteuert und eingelegt. Das Und-Gatter 40 verhindert das Einkoppeln bzw. verursacht ein Auskoppeln, wenn es entweder durch ein Signal an der Klemme 35 (Drehzahldifferenz zum Einkoppeln zu hoch) oder an der Klemme 36 (Kurvenfahrt) gesperrt wird. Solange das Und-Gatter 40 ein Signal abgibt, wird dieses über den Inverter 33 als 0-Signal dem Steuerschaltungsteil 20 zugeführt, wodurch die Bremsregelung abgeschaltet wird, die ja nun nicht mehr sinnvoll ist.

Das bistabile Glied 24 wird rückgesetzt und damit die Sperre I aufgehoben, wenn über das Oder-Gatter 28 ein Signal auf den Rücksetzeingang gelangt. Dies ist der Fall, wenn entweder für eine vorgegebene Zeit von z. B. 0,5 sec (Zeitglied 31 ) die Drosselklappe wenigstens in der Nähe der 0-Stellung ist (Klemme 37), oder gebremst wird (Klemme 38) oder die Fahrzeugverzögerung wenigstens 0 geworden ist (Klemme 39) und keiner der Regelspeicher mehr gesetzt ist (Leitung 22).

Nimmt man an, daß die bisher nicht angetriebenen Räder des Fahrzeugs über eine zweite Sperre II mit dem Antrieb verbindbar sind, so kann man auch diese Sperre II während der Vortriebsregelung bei bestimmten Kriterien automatisch einkoppeln. Dies geschieht, wenn der Regelspeicher für die Regelung des Antriebs eine Zeit lang z. B. 0,5 sec. lang (Zeitglied 32) gesetzt ist und dadurch das bistabile Glied 25 gesetzt wurde. Die Rücksetzkriterien sind für dieses Glied 25 die gleichen wie für das bistabile Glied 24.

## Patentansprüche

1. Fahrzeug mit angetriebenen und nicht angetriebenen Rädern (3, 4; 1, 2) mit einer durch elektrische Signale einkoppelbar ausgebildeten Sperre (5, I), um die angetriebenen Räder (3, 4) einer Achse nach Einlegen der Sperre (5, I) mit gleicher Drehzahl anzutreiben, mit einer Steuerschaltung (13 - 17, 21, 24, 26), die in Abhängigkeit von der Drehzahldifferenz der angetriebenen Räder ein Signal zum Einkoppeln der Sperre (5, I) abgibt und mit einer Vortriebsregelung, die beim Durchdrehen der angetriebenen Räder anspricht, dadurch gekennzeichnet, daß die Vortriebsregelung die Bremsen der angetriebenen Räder im Sinne eines Angleichens der Raddrehzahlen beeinflußt, und daß die Steuerschaltung (13 - 17, 21, 24, 26) bei Ansprechen der Vortriebsregelung das Signal zum Einkoppeln der Sperre (5, I) abgibt, vorausgesetzt, die Drehzahldifferenz wurde durch die Wirkung der Vortriebsregelung auf einen Betrag gleich oder kleiner einem vorgegebenen Schwellwert reduziert, oder daß die Steuerschaltung (13 - 17, 21, 24, 26) bei einer Betätigung des Fahrpedals, das ein Durchdrehen der Räder erwarten läßt (34) das Signal zum Einkoppeln der Sperre (5, I) abgibt, vorausgesetzt, daß die Drehzahldifferenz der beiden Räder gleich oder kleiner als ein vorgegebener Schwellwert ist.

2. Fahrzeug nach Anspruch 1, bei dem zusätzlich noch die Räder wenigstens einer weiteren Achse durch eine zweite Sperre mit dem Antrieb verbindbar sind, dadurch gekennzeichnet, daß auch diese zweite Sperre (II) durch elektrische Signale einkoppelbar ausgebildet ist und daß die Steuerschaltung (20-39) zusätzlich derart ausgebildet ist, daß sie bei Ansprechen (23) der Regelung des Antriebs ein Einkoppelsignal an diese Sperre (II) abgibt.

3. Fahrzeug nach Anspruch 1, dadurch gekennzeichnet, daß die steuerschaltung (21, 24, 26, 34) bei Kickdown des Fahrpedals das signal erzeugt.

4. Fahrzeug nach Anspruch 1, dadurch gekennzeichnet, daß die Steuerschaltung (21, 24, 26, 34) bei einer Verstellung des Fahrpedals um wenigstens einen vorgegebenen Winkel in einer vorgegebenen Zeit das Signal erzeugt.

5. Fahrzeug nach einem der Ansprüche 1 bis 4, dadurch gekennzeichnet, daß das (oder die) Einkoppelsignal(e) beendet wird (werden), wenn die Bremse mittels des Bremspedals betätigt wird (Klemme 38).

6. Fahrzeug nach einem der Ansprüche 1 bis 5, dadurch gekennzeichnet, daß das (oder die) Einkoppelsignal(e) beendet wird (werden), wenn das Fahrpedal oder die Drosselklappe, vorzugsweise eine vorgegebene kurze Zeit lang, in die Ausgangsstellung gelangt ist (Klemme 37).

7. Fahrzeug nach einem der Ansprüche 1 bis 6, dadurch gekennzeichnet, daß das (oder die) Einkoppelsignal(e) beendet wird (werden), wenn die Fahrzeugbeschleunigung unter einen vorgegebenen Wert abgesunken ist und vorzugsweise die Antriebsregelung nicht wirksam ist (Klemme 39 und Gatter 29).

8. Fahrzeug nach Anspruch 1, dadurch gekennzeichnet, daß die Sperre (5, I) ausgekoppelt wird, wenn das Fahrzeug in der Kurve fährt (Klemme 15, 16, 36).

9. Fahrzeug nach Anpruch 1, dadurch gekennzeichnet, daß die Vortriebsregelung, insbesondere die Regelung durch Bremseingriff, nach Einkoppeln der Sperre I unempfindlicher gemacht oder abgeschaltet wird (33).

## Claims

1. Vehicle having driven and nondriven wheels (3, 4; 1, 2) with a locking means (5, I), designed to be capable of being coupled by electric signals, in order to drive the driven wheels (3, 4) of one axle at the same speed after engaging the locking means (5, I), having a control circuit (13 - 17, 21, 24, 26), which emits a signal for coupling of the locking means (5, I) as a function of the difference in speed of the driven wheels, and having a propulsion control, which responds when the driven wheels spin, characterized in that the propulsion control influences the braking of the driven wheels in the sense of an equalizing of the wheel speeds, and in that the control circuit (13 - 17, 21, 24, 26) emits the signal for coupling the locking means (5, I) upon response of the propulsion control, provided that the difference in speed has been reduced by the effect of the propulsion control to an amount equal to or less than a predetermined threshold value, or in that the control circuit (13 - 17, 21, 24, 26) emits the signal for coupling the blocking means (5, I) upon an actuation of the accelerator which makes a spinning of the wheels likely (34), provided that the difference in speed of the two wheels is equal to or less than a predetermined threshold value.

2. Vehicle according to Claim 1, in which in addition the wheels of at least one further axle can also be connected to the drive by a second locking means, characterized in that this second locking means (II) is also designed to be capable of being coupled by electric signals and in that the control circuit (20 - 39) is in addition designed in such a way that it emits a coupling signal to this locking means (II) upon response (23) of the control of the drive.

3. Vehicle according to Claim 1, characterized in that the control circuit (21, 24, 26, 34) generates the signal upon kick-down of the accelerator.

4. Vehicle according to Claim 1, characterized in that the control circuit (21, 24, 26, 34) generates the signal upon a displacement of the accelerator by at least a predetermined angle in a predetermined time.

5. Vehicle according to one of Claims 1 to 4, characterized in that the coupling signal (or the coupling signals) is (are) ended when the brake is operated by means of the brake pedal (terminal 38).

6. Vehicle according to one of Claims 1 to 5, characterized in that the coupling signal (or the coupling signals) is (are) ended when the accelerator or the throttle moves into the initial position, preferably for a predetermined short time (terminal 37).

7. Vehicle according to one of Claims 1 to 6, characterized in that the coupling signal (or the coupling signals) is (are) ended when the vehicle acceleration has dropped below a predetermined value and, preferably, the drive control has not come into effect (terminal 39 and gate 29).

8. Vehicle according to Claim 1, characterized in that the locking means (5, I) is decoupled when the vehicle drives around a bend (terminal 15, 16, 36).

9. Vehicle according to Claim 1, characterized in that the propulsion control, in particular the control by brake intervention, is made less sensitive or switched off (33) after coupling of the locking means I.

## Revendications

1. Véhicule à roues motrices et roues non motrices (3, 4 ; 1, 2), avec un blocage (5, 1) que l'on peut mettre en action par l'intermédiaire de signaux électriques pour entraîner à la même vitesse de rotation les roues motrices (3, 4) d'un essieu après mise en place du blocage (5, 1), avec un circuit de commande (13-17, 21, 24, 26) qui envoie un signal de mise en action du blocage (5, 1) en fonction de la différence de rotation des roues motrices, et, avec une régulation de la propulsion qui actionne les roues motrices en cas de patinage des roues, véhicule caractérisé en ce que la régulation de la propulsion influence les freins des roues motrices dans le sens d'une égalisation de leur vitesse de rotation, et en ce qu'en cas d'excitation de la régulation de la propulsion, le circuit de commande (13-17, 21, 24, 26) envoie le signal de mise en action du blocage (5, 1) à condition que la différence de vitesse de rotation des deux roues fut réduite sous l'action de la régulation de la propulsion à une valeur égale ou inférieure à une valeur de seuil prédéterminée (17 et 36 ; 13 et 40), ou en cas de manoeuvre de la pédale d'accélérateur qui risque de se traduire par un patinage des roues (34), le circuit de commande (13-17, 21, 24, 26) envoie le signal de mise en action du blocage (5, 1) à condition que la différence de vitesse de rotation des deux roues soit égale ou inférieure à une valeur de seuil prédéterminée.

2. Véhicule selon la revendication 1, dans lequel on peut en outre relier à la transmission les roues d'au moins un autre essieu au moyen d'un second blocage, caractérisé en ce que ce second blocage (II) est également conçu de façon à pouvoir être mis en action par des signaux électriques ; et en ce qu'en outre le circuit de commande (20, 39) est conçu de façon à envoyer un signal de mise en action à ce blocage (II) en cas d'excitation (23) de la régulation de la propulsion.

3. Véhicule selon la revendication 1, caractérisé en ce que le circuit de commande (21, 24, 26, 34) produit le signal si l'on écrase la pédale d'accélérateur.

4. Véhicule selon la revendication 1, caractérisé en ce que le circuit de commande (21, 24, 26, 34) produit le signal si la pédale d'accélérateur se déplace d'au moins un angle prédéterminé dans un temps prédéterminé.

5. Véhicule selon l'une des revendications 1 à 4, caractérisé en ce que le signal (ou les signaux) de mise en action est supprimé (sont supprimés) si l'on manoeuvre le frein (borne 38).

6. Véhicule selon l'une des revendications 1 à 5, caractérisé en ce que le signal (ou les signaux) de mise en action est supprimé (sont supprimés) si la pédale d'accélérateur ou le papillon des gaz reviennent à leur position d'origine, de préférence pendant un temps bref, prédéterminé (borne 37).

7. Véhicule selon l'une des revendications 1 à 6, caractérisé en ce que le signal (ou les signaux) de mise en action est supprimé (sont supprimés) si l'accélération du véhicule tombe en-dessous d'une valeur prédéterminée et de préférence en l'absence de la régulation de propulsion (borne 39 et porte 29).

8. Véhicule selon la revendication 1, caractérisé en ce que le blocage (5, 1) est supprimé si le véhicule parcourt une courbe (bornes 15, 16, 36).

9. Véhicule selon la revendication 1, caractérisé en ce que, après mise en action du blocage (1), la régulation de propulsion, en particulier la régulation par mise en oeuvre des freins, est invalidée ou mise hors-circuit (33).

FIG. 1

FIG. 2

FIG. 3